# EUROPEAN PATENT APPLICATION

(11) **EP 2 397 453 A1**
(43) Date of publication of application: **21.12.2011**
(21) Application number: 11169301.6
(22) Date of filing: 09.06.2011
(51) Int. Cl.: C04B 35/44, C01B 13/32, C01B 13/36, C01F 17/00

(54) **Method for preparation of synthetic garnets based in luag or yag**

(30) Priority: 18.06.2010 CZ 20100483; 02.06.2011 CZ 20110332
(71) Applicant: Ceské Vysoké Ucení Technické V Praze, 11519 Praha 1 (CZ); Fyzikalni Ustav Av Cr, V. V. I., 18221 Praha 8 (CZ)
(72) Inventor: Cuba, Vaclav, 16100 Praha6 (CZ); Barta, Jan, 27711 Neratovice (CZ); Mucka, Viliam, 18200 Praha 6 (CZ); Nikl, Martin, 18200 Praha 8 (CZ); Pospisil, Milan, 18200 Praha 8 (CZ); Pavelkova, Tereza, 46007 Liberec 6 (CZ); Indrei, Jakub, 79351 Bridlicna (CZ)
(74) Representative: Kubickova, Kvetoslava

(57) **Abstract**

Method of synthetic garnets preparation based on LuAG or YAG, pure or doped with rare earth ions characterized in that aqueous solutions containing ions of given metals - aluminium, lutetium or yttrium, and OH radical scavengers, eventually doped with rare earth ions, are irradiated by UV or ionizing radiation, incurred (formed under irradiation) solid phase or gel is subsequently separated, washed, dried and obtained white powder is subsequently calcined in temperature interval from 800 to 1600°C, resulting in garnet formation of LuAG or YAG, doped with rare earth ions.

## Description

### Scope of the Method

The invention covers method for preparation of synthetic garnets based on lutetium - aluminium Lu₃Al₅O₁₂ garnet (LuAG) or yttrium - aluminium Y₃Al₅O₁₂ garnet (YAG). Both garnets belong to the group of synthetic materials with cubic structure. Monocrystalline LuAG and YAG are very convenient as host matrixes for preparation of scintillating materials by doping monocrystals with foreign elements, especially rare earths ions (M. Sugiyama, Y. Fujimoto, T. Yanagida, Y. Yokota, J. Pejchal, Y. Furuya, H. Tanaka, A. Yoshikawa, Optical Materials 33 (2011), 905-908).

Powder LuAG or YAG may serve as promising (and cheaper) alternative to monocrystals mainly due to the fact that transparent ceramics may be prepared from powder material under convenient conditions. Such ceramics, doped with other ions, e.g. lanthanide ions, may be utilized in solid state lasers [G. De With, H.J.A. Van Dijk, Mater. Res. Bull. 19, 1984, 1669; A. Ikesue, T. Kinoshita, K. Kamata, J. Am. Ceram. Soc. 78, 1995, 2545; A. Ikesue, T. Kinoshita, K. Kamata, J. Am. Ceram. Soc. 78, 1995, 1033; J.R. Lu, M. Prabhu, J. Song, C. Li, J. Xu, K. Ueda, A.A. Kaminskii, H.Yagi, T. Yanagitani, Appl. Phys. B 71, 2000, 469], as phosphors in cathode tubes [Y.C. Kang, I.W. Lenggoro, S.B. Park, J. Phys. Chem. Solids 60, 1999, 1855; Y. Zhou, J. Lin, M. Yu, S. Wang, H. Zhang, Mater. Lett. 56, 2002, 628], in white LEDs or in scintillators.

### State of the Art

Powder YAG (pure or doped) has been prepared by various methods, the most significant being sol-gel. For example, the powder YAG was synthesized via sol-gel method using ethanol as a solvent [L. Yang, T. Lu, H. Xu, N. Wei, J. Alloy. Compd. 484, 2009, 449]. Precursors for the reaction were aluminium and yttrium nitrates and citric acid. Obtained solid phase was pre-calcinated at 500°C, YAG was first observed after calcination at temperature above 800°C. Neodymium doped YAG was prepared via sol-gel method from yttrium and neodymium oxides dissolved in acetic acid, and aqueous solution of aluminium nitrate with added 1,2-ethandiol. Prepared powder was calcinated at 900°C [J. H. Barbaran, M. F. Farahani, F. Hajiesmaeilbaigi, Semiconductor Physics, Quantum Electronics & Optoelectronics 8, 2005, 87]. Modified sol-gel process - sol-gel combustion in solution - was used for powder YAG synthesis, due to reaction of yttrium and aluminium nitrates and glycine [M. B. Kakade, S. Ramanathan, S. K. Roy, J. Mater. Sci. Lett. 21, 2002, 927]. YAG garnet was subsequently obtained by calcination of formed solid phase - highly porous mixture of oxides - at 1100°C. Similarly, YAG doped with neodymium was prepared. Sol-gel combustion in solution of aluminium and yttrium nitrates in the presence of citric acid with subsequent calcination at 1000°C was used [A. L. Costa, L. Esposito, V. Medri, A. Bellosi, Adv. Eng. Mater. 9, 2007, 307].

Powder YAG was also successfully prepared by coprecipitation methods. According to [S. Tong, T. Lu, W. Guo, Mater. Lett. 61, 2007, 4287], the YAG precursors were prepared by coprecipitation in the presence of alcohol and water. Under these conditions, yttrium and aluminium are distributed homogenously in solid phase, and calcination at 900°C leads to YAG formation. YAG nanopowder was also synthesized by coprecipitation of nitrates of both compounds in the presence of ammonium hydrogen carbonate and surfactants [G. Xu, X. Zhang, W. He, H. Liu, H. Li, R. I. Boughton, Mater. Lett. 60, 2006, 962]. Pure YAG was formed after calcination at 900°C.

Solid state reactions are the last significant group of methods for powder YAG preparation. YAG doped with Eu³⁺ ions was prepared from aluminium, yttrium and europium oxides, which were mixed in high energy ball-mill [H. K. Yang, J. H. Jeong, J. Phys. Chem. C 114, 2010, 226]. YAG was prepared after sintration at 1400°C. Composite ceramics YAG/ZrB₂ was prepared in the process consisting of three-steps: preparation of yttrium and aluminium oxides mixture by their coprecipitation from aqueous solution containing nitrates of both elements; milling of dried Y₂O₃-Al₂O₃/ ZrB₂ mixture; sintration of materials in temperature range from 1500 to 1800 °C [J-G. Song, J-G. Li, J-R. Song, L-M. Zhang, J. Ceram. Process. Res. 8, 2007, 356].

Similarly, pure or doped powder LuAG was prepared by various methods, e.g. by coprecipitation of precursor in aqueous solution [Z. Wang, M. Xu, W. Zhang, M. Yin, Journal of Luminescence 122-123 (2007) 437-439; D. Uhlich, P. Huppertz, D.U. Wiechert, T. Justel, Optical Materials 29 (2007), 1505-1509], by solvothermal method [L. Wang, M. Yin, Ch. Guo, W. Zhang, Journal of rare earths 28 (2010), 16-21], by sol-gel reactions [B. You, M. Yin, W. Zhang, H. Guo, L. Lin, Journal of rare earths 24 (2006), 745-748] or by reactions in solid state [H-L. Li, X-J. Liu, L-P. Huang, Journal of the American Ceramic Society 88 (2005), 3226-3228].

The last step of all preparative methods is thermal treatment leading to formation of crystalline YAG or LuAG phases. The minimum necessary temperature usually exceeds 1000°C; the lowering may be achieved via strict control of reaction conditions, mainly in the case of coprecipitation and sol-gel methods.

### Principles of the Invention

The invention may serve for easy and fast preparation of synthetic YAG or LuAG based garnets, either pure or doped with rare earth ions. The principle of the invention is based on irradiation of aqueous solutions containing aluminium, yttrium or lutetium ions, possibly other rare earths ions (Sc, Y, La to Yb) and OH radical scavengers with UV or ionizing radiation. Formed solid phase is separated, washed, dried and calcined at temperatures in the range from 800 to 1600°C, which leads to crystallization of LuAG or YAG.

Sources of irradiation are selected from group consisting of:
- mercury lamp with radiant output from 40 to 160W, irradiation time from 10 to 100 minutes,
- linear electron accelerator with electron energy 1 to 6 MeV, applied dose from 5 to 140 kGy,
- radionuclide ⁶⁰Co gamma source, applied dose from 5 to 140 kGy.

OH radical scavengers are selected from the group consisting of:
- salts of organic acids containing anion R-COO⁻,
- aliphatic alcohols,
- polyvinyl alcohol, acting also as nanoparticle stabilizer.

Solid phase, or transparent, semitransparent, or yellowish amorphous gel is separated from solution via micro/ultrafilration. Prepared material is thoroughly washed and dried at temperature up to 100 °C. Resulting white powder is subsequently calcined. Crystalline garnet modifications LuAG or YAG are formed in temperature interval from 850 to 950 °C. Both synthetic garnets, pure or doped with rare earth ions, may be further press compacted under pressure 5 to 25 MPa and calcinated in temperature interval from 900 to 1600 °C for increase in luminescence intensity.

The invention enables the preparation of powder and/or sintered LuAG or YAG with very good chemical purity, reproducible amount of dopants, very low calcination temperature for crystalline phase formation and absence of other mixed lutetium/yttrium and aluminium oxides. Another advantages are flexibility of production, very low dependence of material quality on reaction conditions, good performance during press compacting and possibility to affect material properties with irradiation time / dose, concentration and ratio of compounds, and addition of doping ions in the form of soluble salts.

Radiation preparation is simple, process of solid phase formation is independent of temperatrure and method does not require strict control of reaction conditions.

### Outline of Figures:

Fig. 1- Diffractogram of samples described in example 2, thermally treated at 800, 850 or 900 °C, compared to diffraction lines of Lu₃Al₅O₁₂ standard from ICDD PDF-2 database;
dependence of detected impulses count (intensity) of X-rays diffracted from sample on diffraction angle.
Fig. 2 - Diffractogram of samples described in example 2, thermally treated at 1200 and 1500 °C, compared to diffraction lines of Lu₃Al₅O₁₂ standard from ICDD PDF-2 database; dependence of detected impulses count (intensity) of X-rays diffracted from sample on diffraction angle.
Fig. 3 - Radioluminescence properties of samples described in example 2, thermally treated at 1200 and 1500 °C in comparison to BGO standard (Bi₄Ge₃O₁₂). Optical emission spectra of samples irradiated with X-rays; dependence of emitted light intensity on wavelength.
Fig. 4 - Diffractogram of samples described in example 3, thermally treated at 800, 900 or 950 °C, compared to diffraction lines of Lu₃Al₅O₁₂ standard from ICDD PDF-2 database;
dependence of detected impulses count (intensity) of X-rays diffracted from sample on diffraction angle.
Fig. 5 - Diffractogram of samples doped with various amounts of Ce (0; 0.1; 0.2; 0.5 and 1.0 %), described in example 4, thermally treated at 1200 °C and compared to diffraction lines of Lu₃Al₅O₁₂ standard from ICDD PDF-2 database; dependence of detected impulses count (intensity) of X-rays diffracted from sample on diffraction angle.
**Fig. 6** - Diffractogram of samples described in example 4, thermally treated at 800, 900 or 950 °C, compared to diffraction lines of Lu₃Al₅O₁₂ standard from ICDD PDF-2 database;
dependence of detected impulses count (intensity) of X-rays diffracted from sample on diffraction angle.
**Fig. 7** - Transmission electron microscope (TEM) images of samples described in example 4, in various resolutions. Samples had been thermally treated at 850, 900, 950, 1000 and 1200 °C and compared to raw untreated precursor.
**Fig. 8** - Radioluminescence properties of samples doped with various amounts of Ce (0; 0.1; 0.2; 0.5 and 1.0 %), described in example 4, thermally treated at 1200 °C and compared to BGO standard. Optical emission spectra of samples irradiated with X-rays; dependence of emitted light intensity on wavelength.
Fig. 9 - Diffractogram of material prepared in example 5, compared to Y₃Al₅O₁₂ standard from ICDD PDF-2 database; dependence of detected impulses count (intensity) of X-rays diffracted from sample on diffraction angle.
Fig. 10 - Diffractogram of material prepared in example 6, compared to Y₃Al₅O₁₂ standard from ICDD PDF-2 database; dependence of detected impulses count (intensity) of X-rays diffracted from sample on diffraction angle.
Fig. 11 - Thermoluminescence of materials prepared in examples 5, 6 and 7a, irradiated with gamma radiation dose 5 Gy; dependence of the intensity of light emitted from the heated sample on its temperature.
Fig. 12 - Radioluminescence properties of materials prepared in examples 5, 6 and 7b in comparison to BGO standard. Optical emission spectra of samples irradiated with X-rays;
dependence of emitted light intensity on wavelength.

### Examples of the Method

### Example 1

Aqueous solution containing 0.003 mol.l⁻¹ lutetium chloride, 0.005 mol.l⁻¹ aluminium chloride and 0.1 mol.l⁻¹ ammonium formate was irradiated using linear electron accelerator with the dose 80 kGy. Gel-like suspension formed under irradiation was separated via micro/ultrafiltration and dried. Resultant transparent material was calcined at 1200 °C. Formed white powder consisted of LuAG and small amount of lutetium oxide.

### Example 2

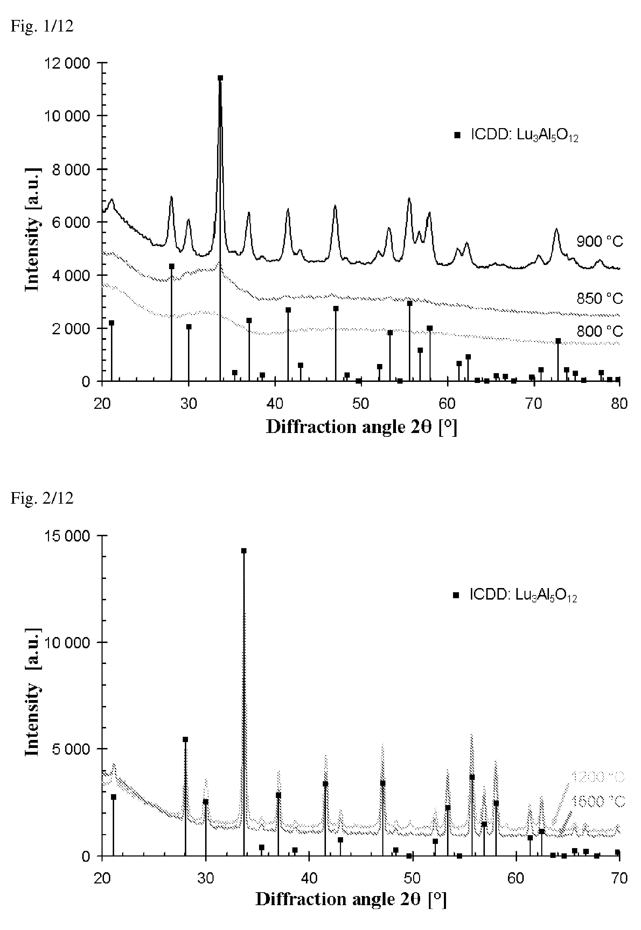

Aqueous solution containing 0.003 mol.l⁻¹ lutetium chloride, 0.005 mol.l⁻¹ aluminium nitrate and 0.1 mol.l⁻¹ of potassium formate was irradiated with UV lamp at power input 120 W for 3 hours. Gel-like suspension formed under irradiation was separated via micro/ultrafiltration, thoroughly washed with water and dried. Subsequently, the material was thermally treated at 800, 850, 900 and 1200 °C for 1 - 2 hours. At 850°C, pure LuAG phase was detected; at 900°C, LuAG with well developed crystals was formed (**Fig. 1**).

Thermally untreated precursor of LuAG was also analyzed via TG/DTA in the range of 30 to 1500 °C at temperature gradient 10 °C/min in air or under argon atmosphere. In both cases, the weight decrease in temperature interval from 30 to 400 °C was observed in the sample, due to dehydration and decomposition of carbonates and/or organics. Observed exothermic peak in DTA curve at 950 °C probably corresponds to the formation of garnet structure. After TG/DTA analysis, the sample contained only lutetium-aluminium garnet without the presence of other crystalline phases (Fig. 2).

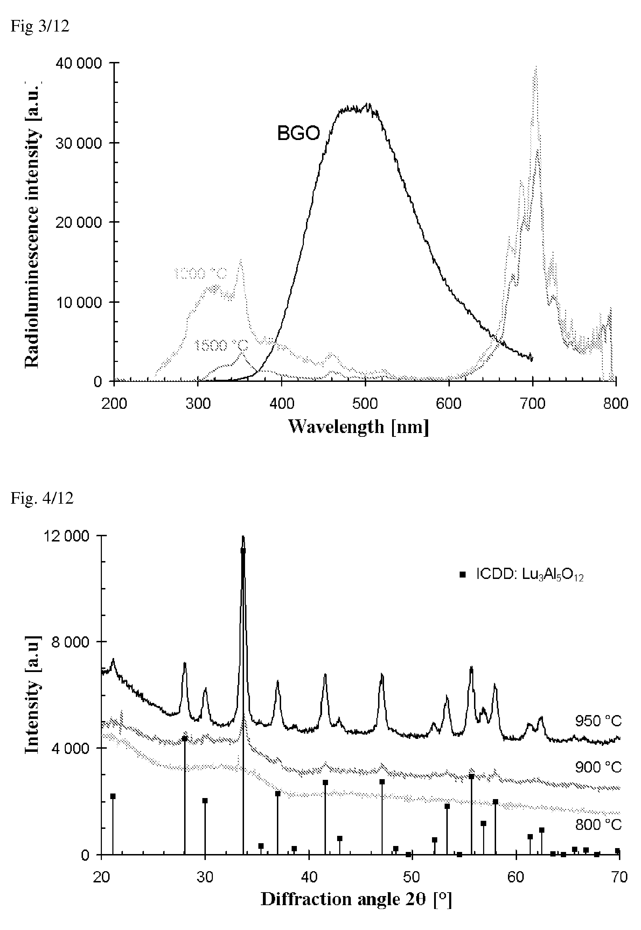

Radioluminescence measurement of sample treated at 1200 °C and 1500 °C (Fig. 3) revealed emission lines of Tm³⁺ (∼ 706 nm), present as impurity in lutetium chloride (30 ppm).

### Example 3

Aqueous solution containing 0.003 mol.l⁻¹ lutetium chloride, 0.005 mol.l⁻¹ aluminium nitrate and 0.1 mol.l⁻¹ ammonium formate was irradiated with UV lamp at power input 120 W for 3 hours. Gel-like suspension formed under irradiation was separated via micro/ultrafiltration, thoroughly washed with water and dried. Subsequently, the material was thermally treated at 800, 900 or 950 °C for 2 hours. At 900 °C, pure crystalline LuAG was detected; at 950°C, LuAG with well developed crystals was formed (Fig. 4).

### Example 4

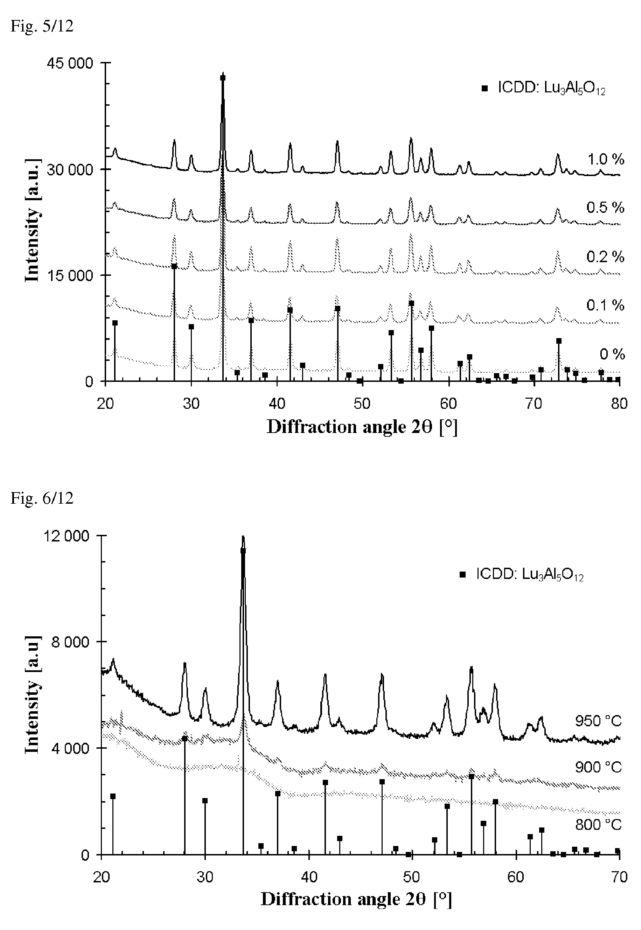

Aqueous solutions containing 0.003 mol.l⁻¹ lutetium nitrate, 0.005 mol.l⁻¹ aluminium nitrate, 0.1 mol.l⁻¹ ammonium formate and 1.10⁻⁶, 2.10⁻⁶, 5.10⁻⁶ or 10⁻⁵ mol.l⁻¹ cerium nitrate were irradiated with UV lamp at power input 120 W for 4 hours. Value of pH of the solution increased during irradiation from 4.8 to 6.2. Gel-like suspension formed under irradiation was separated via micro/ultrafiltration, thoroughly washed with water and dried. Subsequently, it was thermally treated at 1200 °C for 1-2 hours. All prepared samples consisted of pure crystalline LuAG (**Fig. 5**). Thermally treated samples with higher Ce amount (Lu₃Al₅Ce_{0,005}O₁₂, Lu₃Al₅Ce_{0,01}O₁₂) had slightly yellow color.

Thermal analysis TG/DTA of Ce-doped samples in temperature interval from 30 to 1500 °C at temperature gradient 2 °C/min in air was performed. Exothermic peak in DTA curve at 910 °C, corresponding to the formation of garnet structure, was observed. XRPD analysis of samples thermally treated at 800, 850 and 900 °C confirmed formation of garnet phase near this temperature (**Fig. 6**).

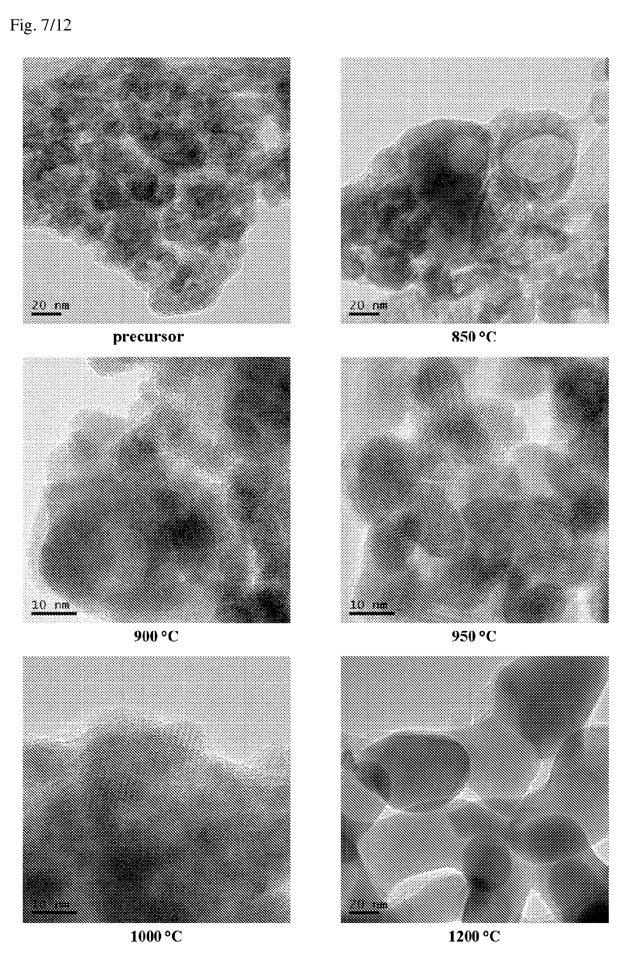

Dependence of crystalline phase formation on temperature was also observed via high resolution transmission electron microscope HRTEM (Fig. 7) - above 850 °C, particles with regular crystal lattice may be observed; at 1000 °C up to 1200 °C, particles form crystalline blocks.

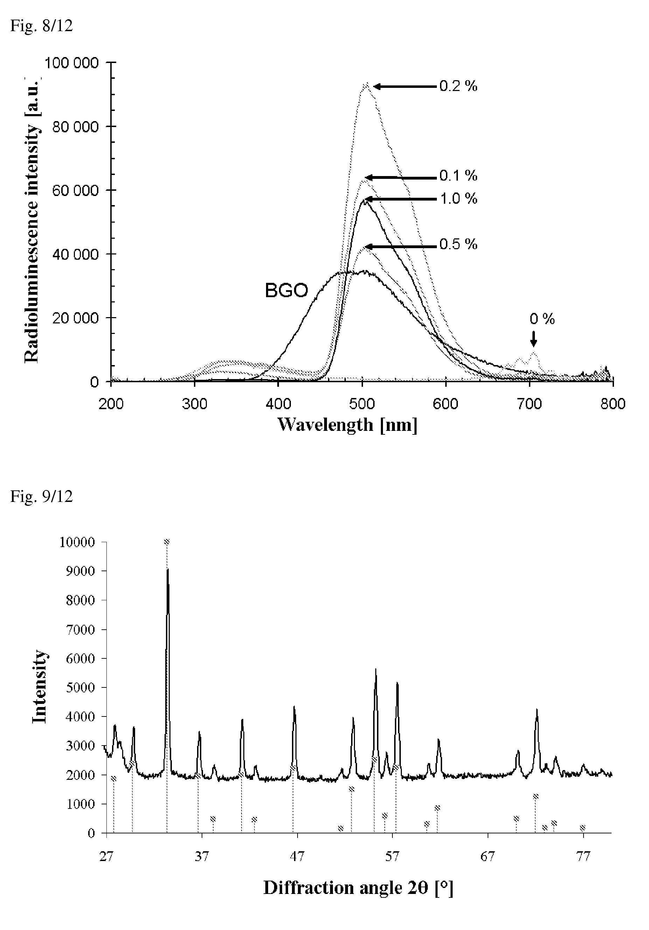

XRF analysis revealed that Ce amount in doped garnet increases linearly with initial Ce concentration in irradiated solutions. Radioluminescence measurement of LuAG:Ce samples treated at 1200 °C shown strong emission of Ce³⁺ luminescence centre at 506 nm, with maximum at circa 0.2% of Ce (Fig. 8). Weak emission of Tm³⁺ center decreased with increasing Ce amount according to a.[c(Ce)]⁻¹ + b curve.

### Example 5

Aqueous solutions containing 0.0075 mol.dm⁻³ aluminium chloride, 0.0125 mol.l⁻³ yttrium nitrate and 0.18 mol.dm⁻³ potassium formate were irradiated with 254 nm UV light for 2 hours at radiant output 160W. The temperature of irradiated solution did not exceed 50°C. White solid phase formed under irradiation was separated via ultrafiltration, washed with water and ethanol and dried at laboratory temperature. It was subsequently calcined for 2 hours at 1300°C. XRPD analysis shown that under these conditions, pure YAG phase was formed (Fig. 9).

### Example 6

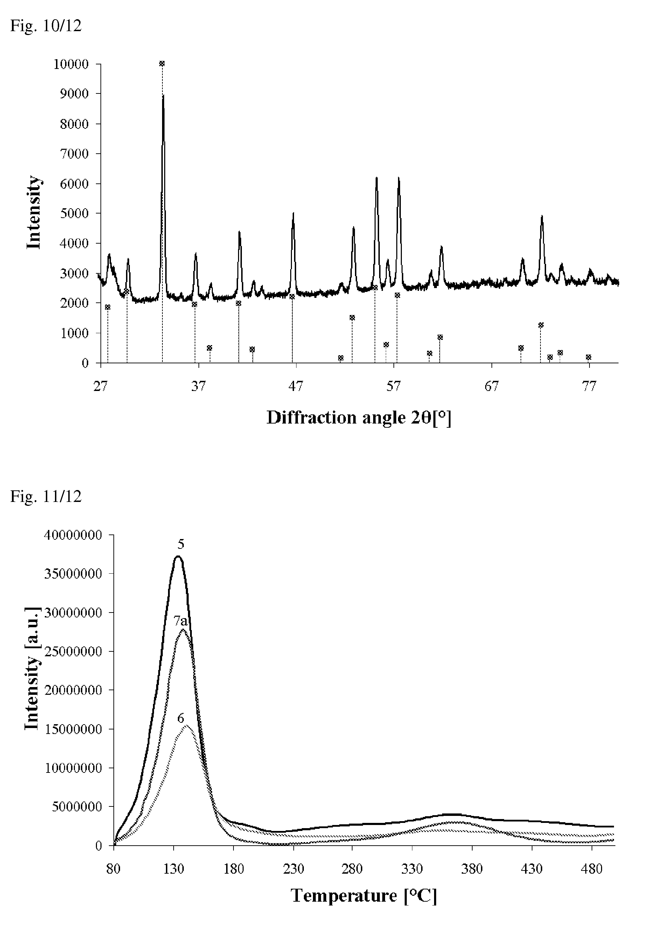

Aqueous solutions containing 0.0075 mol.dm⁻³ aluminium nitrate, 0.0125 mol.dm⁻³ yttrium nitrate and 0.1 mol.dm⁻³ potassium formate were irradiated with 254 nm UV light for 4 hours at radiant output 40W. The temperature of irradiated solution did not exceed 50°C. The solid phase formed under irradiation was separated via ultrafiltration, dried at laboratory temperature and calcined for 3 hours at 900°C. XRPD analysis shown that under these conditions, pure YAG phase was formed (**Fig. 10**).

### Example 7

Aqueous solutions as in examples 1 and 2 were irradiated:
a) in thin layer by accelerated electrons with energy 4.5 MeV, b) in polypropylene flasks by gamma radiation of ⁶⁰Co source with energy 1.17 and 1.33 MeV; applied doses ranged from 70 to 90 kGy in both cases.

The solid phase formed under irradiation was ultrasonically dispersed, then filtered and dried as in previous examples. It was observed that by calcination at 1000 °C, pure YAG phase is formed, as in previous examples.

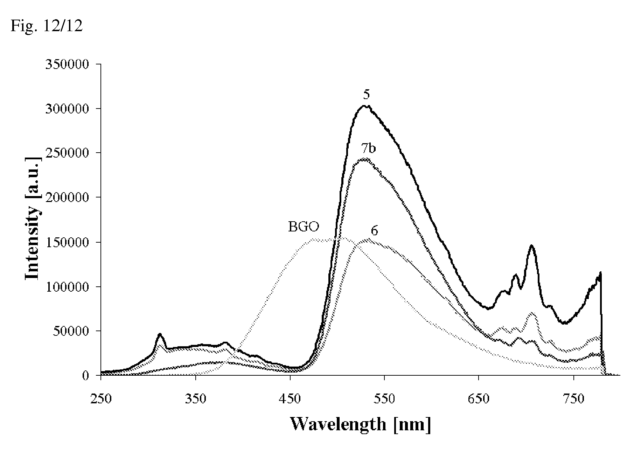

XRPD analysis of samples has shown typical structure of yttrium-aluminium garnet in all cases. ICP-MS analysis confirmed high purity of prepared materials. All prepared samples show intensive thermoluminescence and radioluminescence (Figs. 11 and 12), which makes the materials promising for possible application in detection and dosimetry of radiation. Under given conditions (gamma radiation dose 5 Gy), thermoluminescence curves of prepared materials show only one distinctive peak around 140°C, as is shown in Fig. 11. Materials also show intensive radioluminescence in both visible and UV spectral region, as is shown in Fig. 12.

### Industrial applicability

Preparation of synthetic garnets based on LuAG or YAG, pure or doped with rare earth ions, is applicable for material synthesis and detection or dosimetry, e.g. for manufacturing of scintillation materials or luminophores, also in ceramic form.

## Claims

1. Method for preparation of synthetic garnets based on LuAG or YAG, **characterized in that** aqueous solutions containing ions of given metals - aluminium, lutetium or yttrium, and OH radical scavengers are irradiated by UV or ionizing radiation, incurred (formed under irradiation) solid phase or gel is subsequently separated, washed, dried and obtained white powder is subsequently calcined in temperature interval from 800 to 1600°C, resulting in garnet formation on of LuAG or YAG.

2. Method for preparation of synthetic garnets based on LuAG or YAG, doped with rare earth ions, **characterized in that** aqueous solutions containing ions of given metals - aluminium, lutetium or yttrium, doped with rare earth ions, and OH radical scavengers are irradiated by UV or ionizing radiation, incurred (formed under irradiation) solid phase or gel is subsequently separated, washed, dried and obtained white powder is subsequently calcined in temperature interval from 800 to 1600°C, resulting in garnet formation on of LuAG or YAG doped with rare earth ions.

3. Method according to claim 1 and 2, **characterized by** irradiation via following group of sources:
- UV lamp with variable power output 40 to 160W,
- linear electron accelerator with electron energy from 1 to 6 MeV and applied doses from 5 to 140 kGy,
- radionuclide ⁶⁰Co source.

4. Method according to claims 1 to 3 **characterized by** OH radical scavengers selected from following groups:
- salts of organic acids containing anion R-COO⁻,
- aliphatic alcohols,
- polyvinyl alcohol, acting also as nanoparticle stabilizer.

5. Method according to claims 1 to 4 **characterized by** separation of solid phase or gel via micro/ultrafiltration, after thorough washing, the solid phase is dried at temperatures up to 100 °C.
